# EUROPÄISCHE PATENTSCHRIFT

(11) **EP 3 339 829 B1**
(45) Veröffentlichungstag und Bekanntmachung des Hinweises auf die Patenterteilung: **08.02.2023**
(21) Anmeldenummer: 17207904.8
(22) Anmeldetag: 18.12.2017
(51) Int. Cl.: G01L 9/00, G01L 19/06, G01L 23/10

(54) **SENSORGEHÄUSE FÜR EINEN KRAFT- ODER DRUCKSENSOR, KRAFT- ODER DRUCKSENSOR SOWIE VERFAHREN ZUR HERSTELLUNG EINES SENSORGEHÄUSES**
FORCE OR PRESSURE SENSOR, SENSOR HOUSING FOR A FORCE OR PRESSURE SENSOR AND METHOD FOR PRODUCING A SENSOR HOUSING
BOÎTIER DE CAPTEUR POUR UN CAPTEUR DE FORCE OU DE PRESSION, CAPTEUR DE FORCE OU DE PRESSION AINSI QUE PROCÉDÉ DE FABRICATION D'UN BOÎTIER DE CAPTEUR

(30) Priorität: 20.12.2016 DE 102016225666
(43) Veröffentlichungstag der Anmeldung: 27.06.2018
(73) Patentinhaber: Piezocryst Advanced Sensorics GmbH, 8020 Graz (AT)
(72) Erfinder: Pammer, Rene, 8043 Graz (AT); Schricker, Dr., Alexander, 8046 Graz (AT); Kröger, Dr., Dietmar, 8010 Graz (AT)
(74) Vertreter: Hahner, Ralph

(56) Entgegenhaltungen:
- EP-A1- 0 008 900
- EP-A1- 3 059 567
- JP-A- 2004 347 573

## Beschreibung

Die vorliegende Erfindung betrifft ein Sensorgehäuse für einen Kraft- oder Drucksensor, insbesondere zum Einsatz in einem Brennraum, einen Kraft- oder Drucksensor mit einem solchen Sensorgehäuse, insbesondere zum Einsatz in einem Brennraum, sowie ein Verfahren zur Herstellung eines solchen Sensorgehäuses, insbesondere zum Einsatz in einem Brennraum.

Aus dem Stand der Technik sind verschiedene Vorrichtungen zum Erfassen eines Drucks in einem Druckraum, insbesondere in einem Brennraum einer Hubkolbenmaschine, bekannt. Im Allgemeinen nimmt dabei eine Membran, welche mit dem Druckraum in Verbindung steht, den Druck unter Verformung auf. Ein Membranstempel, welcher Teil der Membran oder mit dieser verbunden ist, übermittelt diese Verformung bzw. den dazu proportionalen Druck an einen Druckwandler, welcher daraufhin dem Druck proportionale Signale, insbesondere elektrische oder optische, erzeugt.

Im Allgemeinen ist das Druck-Kraft-Verhältnis der Membran bzw. die Amplitude der Auslenkung der Membran bei einem vorgegebenen Druck kritisch von der Membranfläche abhängig. Insbesondere aufgrund der in der Regel kleinen Ausmaße eines Drucksensors ist es eine Herausforderung, Drucksensoren herzustellen, deren Membranfläche auch bei (Druck-)Belastung konstant bleibt. Zudem treten, insbesondere im Bereich von Anlenkpunkten der Membran, Spannungsspitzen in der Membran auf, die bei einer Wechselbelastung zu einem Schwingungsbruch führen können.

DE 11 2010 000 748 T5 betrifft das Messen von Druck durch einen einstückigen Drucksensoranschluss, welcher eine durch einen Kanal mit einem Diaphragma verbundene Öffnung aufweist. Die Öffnung ist dazu ausgebildet, eine Substanz durch den Kanal in Richtung des Diaphragmas zu leiten, wodurch eine mechanische Belastung auf das Diaphragma ausgeübt wird. Der Drucksensoranschluss ist aus einem einzelnen Stück Material gefertigt und hat keine Schweißnähte, Lötstellen oder Verbindungsstellen.

DE 10 2011 002 596 A1 betrifft einen Brennraumdrucksensor aufweisend ein Gehäuse mit einer Gehäuseöffnung, welche durch mindestens eine Membran abgedichtet ist. Dabei kann die Membran einstückig mit dem Gehäuse ausgebildet oder im Bereich der mindestens einen Gehäuseöffnung durch mindestens eine Fixierung, beispielsweise eine kraftschlüssige und/oder formschlüssige und/oder stoffschlüssige Verbindung, beispielsweise eine Schweißverbindung, mit dem Gehäuse verbunden sein. In einem Innenraum ist ein mechanisch-elektrisches Wandlerelement aufgenommen, welches eingerichtet ist, einen durch einen Stößel übertragenen Druck in einem Brennraum zu erfassen.

CH 705 261 A1 betrifft ein Verfahren zum Verbinden einer Membran an ein Gehäuse eines Druck- oder Kraftsensors, wobei zuerst eine erste Verbindung in einem inneren Bereich zwischen einer Gehäuseringfläche und einer Membranringfläche und anschließend eine zweite Verbindung zwischen der Gehäuseringfläche und der Membranringfläche hergestellt wird. Die erste Verbindung kann eine Lötung, eine Hartlötung, eine Schweißung, eine Widerstandsschweißung, ein Bonden oder ein Thermokompressionsbonden sein. Die zweite Verbindung kann eine Laserschweißung, eine ElektronenstrahlSchweißung, eine Schweißung nach dem Argonarc-Verfahren, eine Wolfram-Inertgasschweißung, eine Schutzgasschweißung oder ein Bonden sein.

Das Dokument EP0008900 beschreibt ebenfalls einen Drucksensor mit einem Membranstempel und einer Membran.

Es ist eine Aufgabe der Erfindung, ein verbessertes Sensorgehäuse für einen Kraft- oder Drucksensor und/oder einen Kraft- oder Drucksensor mit einem solchen Sensorgehäuse bereitzustellen. Insbesondere ist es eine Aufgabe der Erfindung, ein Sensorgehäuse robuster gegen Ermüdungsschäden, insbesondere Ermüdungsbrüche, zu machen.

Diese Aufgabe wird von dem Sensorgehäuse für einen Kraft- oder Drucksensor, insbesondere zum Einsatz in einem Brennraum, und einem Kraft- oder Drucksensor mit einem solchen Sensorgehäuse, insbesondere zum Einsatz in einem Brennraum, sowie dem Verfahren zur Herstellung eines Sensorgehäuses, insbesondere zum Einsatz in einem Brennraum, gemäß den unabhängigen Ansprüchen gelöst.

Vorteilhafte Ausgestaltungen der Erfindung werden in den abhängigen Ansprüchen beansprucht. Die Lehre der Ansprüche wird hiermit zu einem Teil der Beschreibung gemacht.

Ein erster Aspekt der Erfindung betrifft ein Sensorgehäuse für einen Kraft- oder Drucksensor, insbesondere zum Einsatz in einem Brennraum, welches einen Sensorkörper, einen Membranstempel, ein Metallblech, welches den Sensorkörper einseitig abschließt, und wenigstens einen Vorsprung in Bezug auf den Sensorkörper und/oder den Membranstempel aufweist. Das Metallblech ist mit dem Sensorkörper und mit dem Membranstempel in der Weise mittels einer stoffschlüssigen Fügeverbindung verbunden, dass das Metallblech in einem Bereich zwischen dem Sensorkörper und dem Membranstempel eine, insbesondere kreisringförmige, Membran bildet. Der wenigstens eine Vorsprung ist in wenigstens einer von zwei Ecken angeordnet, welche jeweils von dem Metallblech mit dem Sensorkörper und dem Membranstempel gebildet werden. Zudem ist der wenigstens eine Vorsprung in der Weise ausgebildet, dass eine mechanische Kenngröße, insbesondere die Spannung, in dem Metallblech, insbesondere in der Membran, im Bereich des Vorsprungs bei Einwirken eines Drucks innerhalb einer Betriebsgrenze, insbesondere einer Betriebsgrenze von etwa 300 bar bis etwa 700 bar, bevorzugt von etwa 400 bar bis etwa 600 bar und am bevorzugtesten von etwa 500 bar des Sensorgehäuses auf das Metallblech einen Kennwert des Metallblechs, insbesondere dessen Streckgrenze, nicht übersteigt.

Ein zweiter Aspekt der Erfindung betrifft ein Sensorgehäuse für einen Kraft- oder Drucksensor, insbesondere zum Einsatz in einem Brennraum, welches einen Sensorkörper, einen Membranstempel, ein Metallblech, welches den Sensorkörper einseitig abschließt, und wenigstens einen Vorsprung in Bezug auf den Sensorkörper und/oder den Membranstempel aufweist. Das Metallblech ist mit dem Sensorkörper und mit dem Membranstempel in der Weise mittels einer stoffschlüssigen Fügeverbindung verbunden, dass das Metallblech in einem Bereich zwischen dem Sensorkörper und dem Membranstempel eine, insbesondere kreisringförmige, Membran bildet. Der wenigstens eine Vorsprung ist in wenigstens einer von zwei Ecken angeordnet, welche jeweils von dem Metallblech mit dem Sensorkörper und dem Membranstempel gebildet werden. Der wenigstens eine Vorsprung und das Metallblech, insbesondere die Membran, wirken in der Weise zusammen, dass der wenigstens eine Vorsprung bei Einwirken eines Drucks auf das Metallblech verformt wird.

Im Folgenden ist, wenn von einem Drucksensor gesprochen wird, auch immer ein, insbesondere baugleicher, Kraftsensor gemeint.

Ein Sensorkörper im Sinne der Erfindung ist ein Teil eines Sensorgehäuses, welcher wenigstens die Membran trägt. Insbesondere spannt ein Sensorkörper zumindest eine Öffnung auf, welche einem Druckraum, insbesondere einem Brennraum einer Hubkolbenmaschine, zugewandt oder zuwendbar ist und bevorzugt durch die Membran verschlossen ist oder wird. Vorzugsweise weist der Sensorkörper wenigstens abschnittsweise die Form eines Hohlquaders oder Hohlzylinders auf, wobei der Sensorkörper weiter vorzugsweise dazu ausgebildet ist, im Inneren bzw. im durch den Hohlquader oder Hohlzylinder aufgespannten Innenraum zumindest einen Teil eines Membranstempels und zumindest einen Teil eines Druckwandlers, insbesondere eines piezoelektrischen Elements, aufzunehmen. Als Druckwandler kommen vorzugsweise auch optische, kapazitive, induktive oder auch oszillierende Bauteile, wie etwas Schwingquarze in Frage.

Ein Membranstempel im Sinne der Erfindung ist ein Bereich, in welchem eine Membran verstärkt ist. Der Membranstempel kann dabei durch die Membran selbst oder ein weiteres Element gebildet werden. Insbesondere kann der Membranstempel mit dem Metallblech einstückig ausgebildet sein. Vorzugsweise kann die Membran im Bereich des Membranstempels durch zu erwartende Drücke eines Drucksensors nicht verformt werden.

Unter einem Metallblech im Sinne der Erfindung ist insbesondere ein flaches bzw. dünnes, im Wesentlichen ebenes Metallstück zu verstehen. Vorzugsweise weist das Metallblech eine kreisförmige Form auf, wobei sein Durchmesser bevorzug einem Durchmesser des, insbesondere ebenfalls kreisförmig, etwa als Hohlzylinder, ausgebildeten, Sensorkörpers entspricht.

Vorzugsweise weist das Metallblech eine Stärke von etwa 0,05 mm bis 0,3 mm, bevorzugt etwa 0,075 mm bis 0,2 mm, insbesondere etwa 0,1 mm, auf. Dadurch kann der Sensorkörper und/oder der Membranstempel mittels der stoffschlüssigen Fügeverbindung zuverlässig mit dem Metallblech verbunden werden, wobei das Metallblech zwischen Sensorkörper und Membranstempel eine, insbesondere flexible, Membran bildet. Vorzugsweise verformt bzw. bewegt sich die Membran, insbesondere in einem Bereich am Membranstempel, bei Aufnahme eines Drucks um etwa 3 bis 15 µm, bevorzugt etwa 4 bis 10 µm, insbesondere etwa 4,5 µm. Insbesondere beträgt dabei die Auslenkung des Membranstempels durch die sich verformende bzw. bewegende Membran vorzugsweise etwa 3 bis 15 µm, bevorzugt etwa 4 bis 10 µm, insbesondere etwa 4,5 µm.

Ein Brennraum im Sinne der Erfindung ist ein vorzugsweise geschlossener Raum, in welchem ein brennbares Arbeitsmedium, etwa ein Gas oder ein Pulver, insbesondere als Teil eines Arbeitszyklus, verbrannt wird. Die Verbrennung kann dabei insbesondere explosionsartig oder mit offener Flamme stattfinden. Bevorzugt ist unter einem Brennraum ein Brennraum einer Verbrennungskraftmaschine, insbesondere eines Hubkolbenmotors, zu verstehen. Alternativ kann ein Brennraum aber auch als Brennkammer einer Gasturbine oder eines Strahltriebwerks, als Verbrennungskammer, insbesondere einer Dampflokomotive, oder als Feuerraum, insbesondere eines Heizkraftwerks, ausgebildet sein.

Unter einem Anlenkpunkt im Sinne der Erfindung ist insbesondere ein ortsfester Punkt oder Bereich eines beweglichen Elements, etwa einer oszillierenden oder auslenkbaren Membran, zu verstehen. Ein Anlenkpunkt kann dementsprechend ein Knotenpunkt einer Schwingung bzw. eines schwingungsfähigen Systems sein. Insbesondere definiert ein Anlenkpunkt den Punkt im Raum, ab dem ein bewegliches Element auslenkbar ist oder wird. Insbesondere ist ein bewegliches Element zwischen zwei Anlenkpunkten auslenkbar.

Die Erfindung basiert insbesondere auf dem Ansatz, Belastungen in dem Metallblech, insbesondere in Anlenkpunkten der Membran, bei einer durch einen auf das Metallblech einwirkenden Druck bedingten Verformung der Membran zu vermeiden oder zumindest zu reduzieren. Diesbezüglich ist der wenigstens eine, insbesondere kragen- oder schulterartig ausgebildete, Vorsprung dazu eingerichtet und/oder geformt, eine mechanische Kenngröße, welche bei einem auf das Metallblech wirkenden Druck anwächst und dadurch die mechanische Integrität des Metallblechs, insbesondere negativ, beeinträchtigt, zu reduzieren oder zu delokalisieren. Alternativ oder zusätzlich verformt sich der wenigstens eine Vorsprung bei Einwirken des Drucks auf das Metallblech.

Insbesondere wird dadurch verhindert, dass die mechanische Kenngröße, insbesondere eine Spannung, einen, insbesondere vorgegebenen, Kennwert des Metallblechs oder eines Materials des Metallblechs, insbesondere eine Streckgrenze, überschreitet. Dadurch wird die Materialbelastung des Metallblechs vorteilhaft reduziert. Insbesondere können Spannungsspitzen bei einem Oszillieren der Membran vorteilhaft vermieden oder zumindest reduziert und somit Schwingbrüche effektiv vermieden werden. Alternativ oder zusätzlich verringert sich die Materialbelastung des Metallblechs vorteilhaft, insbesondere in den Anlenkpunkten der Membran und/oder in einem Bereich des wenigstens einen Vorsprungs, da durch die Verformung des wenigstens einen Vorsprungs zumindest ein Teil der mechanischen Belastung in dem wenigstens einen Vorsprung anliegt und somit nicht von dem Metallblech getragen werden muss. Insbesondere liegt die Materialbelastung nicht mehr punktuell, etwa in einem Anlenkpunkt der Membran, vor, sondern verteilt sich, etwa über einen Bereich des wenigstens einen Vorsprungs. Spannungsspitzen werden dadurch delokalisiert und abgemildert.

Vorzugsweise ist der wenigstens eine Vorsprung derart ausgebildet, dass der Sensorkörper und/oder der Membranstempel, insbesondere in seiner Form, kontinuierlich in das Metallblech, insbesondere in dem Bereich des Metallblechs, der die Membran bildet, übergeht. Weiter vorzugsweise ist der wenigstens eine Vorsprung derart ausgebildet, dass er sich an die Membran anschmiegt. Dadurch wird auch eine Wanderung wenigstens eines Anlenkpunkts bei einer (Druck-)Belastung bzw. einer Auslenkung der Membran vermieden oder zumindest vermindert. Auch dadurch können Lastwechselbeanspruchungen durch eine oszillierende Membran vorteilhaft abgefedert und somit Schwingbrüche effektiv vermieden werden.

Insgesamt ermöglicht die Erfindung ein verbessertes, insbesondere zuverlässiges, Sensorgehäuse eines Kraft- oder Drucksensors, insbesondere zum Einsatz in einem Brennraum, und einen entsprechend verbesserten, insbesondere zuverlässigen, Kraft- oder Drucksensor, insbesondere zum Einsatz in einem Brennraum.

Mit dem erfindungsgemäßen Sensorgehäuse ist darüber hinaus auch möglich, bereits vor der Montage geprägte Metallbleche zu einer funktionierenden Membrane mit dem Sensorkörper zu verbinden. Die kann in sehr einfacher Weise geschehen, da eine Bearbeitung des Metallblechs nach einer Verbindung mit dem Sensorkörper nicht mehr nötig ist. Geprägte Metallbleche können beispielsweise gewellt sein oder in verschiedenen Bereichen unterschiedliche Dicken aufweisen.

In einer bevorzugten Ausführung wird der wenigstens eine Vorsprung verformt, wenn der Druck einen vordefinierten Wert übersteigt. Vorzugsweise weist der wenigstens eine Vorsprung dabei aus ein, insbesondere hartes bzw. widerstandsfähiges, Material auf, welches sich bei kleinen, auf das Metallblech einwirkenden Drücken nicht verformt. Dadurch wird insbesondere gewährleistet, dass ein Anlenkpunkt der Membran bei einer durch einen kleinen auf das Metallblech einwirkenden Druck bedingten Verformung der Membran nicht wandert.

In einer weiteren bevorzugten Ausführung liegen der wenigstens eine Vorsprung und das Metallblech, insbesondere die Membran, aneinander an. Vorzugsweise stehen der wenigstens eine Vorsprung und das Metallblech, insbesondere die Membran, miteinander in, insbesondere stoffschlüssigem, Kontakt. Dadurch kann ein auf das Metallblech, insbesondere die Membran, einwirkenden Druck besonders zuverlässig und direkt auf den wenigstens einen Vorsprung übertragen werden, der sich entsprechend verformt und die Belastung zumindest teilweise aufnimmt.

In einer weiteren bevorzugten Ausführung verbindet die stoffschlüssige Fügeverbindung den Sensorkörper und/oder den Membranstempel derart mit dem Metallblech, dass der wenigstens eine Vorsprung bei Einwirken eines Drucks auf das Metallblech, insbesondere auf die Membran, wenigstens einen Teil der Belastung, insbesondere der Spannung, des Metallblechs, insbesondere der Membran, aufnimmt. Insbesondere verformt sich der wenigstens eine Vorsprung dabei. Dadurch kann die Belastung in der Membran, insbesondere in einem Anlenkpunkt der Membran, besonders zuverlässig vermindert werden.

In einer weiteren bevorzugten Ausführung verbindet die stoffschlüssige Fügeverbindung den Sensorkörper und/oder den Membranstempel mit dem Metallblech im Bereich des wenigstens einen Vorsprungs. Dadurch kann eine Belastung des Metallblech, insbesondere der Membran, besonders zuverlässig und direkt von dem wenigstens einen Vorsprung aufgenommen werden, wodurch das Metallblech, insbesondere die Membran, insbesondere in dem Bereich des wenigstens einen Vorsprungs, entsprechend weniger belastet, insbesondere verspannt, wird.

In einer bevorzugten Ausführung ist der wenigstens ein Vorsprung in Bezug auf den Sensorkörper mit dem Sensorkörper und/oder wenigstens ein Vorsprung in Bezug auf den Membranstempel mit dem Membranstempel einstückig ausgebildet. Dabei verbindet die stoffschlüssige Fügeverbindung den Sensorkörper und/oder den Membranstempel bzw. den wenigstens einen Vorsprung derart mit dem Metallblech, dass der wenigstens eine Vorsprung bei Einwirken eines Drucks auf das Metallblech, insbesondere auf die Membran, wenigstens einen Teil der Belastung aufnimmt.

Solch ein Sensorkörper und/oder ein Membranstempel mit Vorsprung kann besonders einfach und zuverlässig hergestellt werden, insbesondere durch ein Trennverfahren, etwa durch Drehen oder elektrochemisches Abtragen (ECM).

Vorzugsweise ist der Sensorkörper und/oder der Membranstempel mit dem jeweils wenigstens einen Vorsprung dazu eingerichtet, die von dem wenigstens einen Vorsprung wenigstens teilweise aufgenommene Belastung aufzunehmen und/oder abzuleiten, insbesondere ohne dass sich der Sensorkörper und/oder der Membranstempel dabei in einem das Metallblech tragenden Bereich verzieht. Weiter vorzugsweise ist der Sensorkörper und/oder der Membranstempel eingerichtet, insbesondere in einer Weise massiv ausgebildet, etwa mit hohen Wandstärken, dass bei einer wenigstens teilweisen Verformung des wenigstens einen Vorsprungs bei Aufnahme von Belastung die Verformung nicht auf den Sensorkörper bzw. den Membranstempel übergeht bzw. weitergeleitet wird. Dadurch können Spannungsspitzen im Metallblech, insbesondere in einem Bereich der Membran, vermieden oder zumindest reduziert werden, ohne dass sich das Druck-Kraft-Verhältnis der Membran, insbesondere durch ein Wandern wenigstens eines Anlenkpunkts, wesentlich verändert.

In einer weiteren bevorzugten Ausführung ist der wenigstens eine Vorsprung von der stoffschlüssigen Fügeverbindung gebildet. Dabei verbindet die stoffschlüssige Fügeverbindung, insbesondere der wenigstens eine Vorsprung, den Sensorkörper und/oder den Membranstempel derart mit dem Metallblech, dass der wenigstens eine Vorsprung bei Einwirken eines Drucks auf das Metallblech, insbesondere auf die Membran, wenigstens einen Teil der Belastung aufnimmt. Vorzugsweise weist die stoffschlüssige Fügeverbindung, insbesondere der wenigstens eine Vorsprung, ein mechanisch weiches, d.h. elastisches, Material auf, welches bevorzugt dazu eingerichtet bzw. geeignet ist, einwirkenden Druck zumindest teilweise aufzunehmen. Weiter vorzugsweise weist der Sensorkörper und/oder dem Membranstempel ein anderes, insbesondere mechanisch hartes, Material auf. Dadurch wird gewährleistet, dass auf das Metallblech einwirkender Druck zumindest teilweise von der stoffschlüssige Fügeverbindung, insbesondere dem wenigstens einen Vorsprung, nicht jedoch von dem Sensorkörper und/oder dem Membranstempel aufgenommen wird, so dass wenigstens ein Anlenkpunkt der Membran nicht oder nur geringfügig wandert und sich das Druck-Kraft-Verhältnis der Membran nicht wesentlich ändert.

In einer weiteren bevorzugten Ausführung weist der wenigstens eine Vorsprung eine konkave Krümmung auf. Insbesondere ist der wenigstens eine Vorsprung derart ausgebildet und/oder angeordnet, dass er sich aufgrund der konkaven Krümmung in radialer Richtung zur Membran hin verjüngt. Dadurch weist der wenigstens eine Vorsprung in einem der Membran zugewandten Bereich eine geringere Steifigkeit auf als in einem der Membran abgewandten Bereich, so dass sich der wenigstens eine Vorsprung in dem der Membran zugewandten Bereich stärker, insbesondere elastisch, verformen kann. Vorzugsweise nimmt die elastische Verformbarkeit des wenigstens einen Vorsprungs mit der Verjüngung zur Membran hin, insbesondere kontinuierlich, zu, so dass auch die Fähigkeit des wenigstens einen Vorsprungs, Belastung aufzunehmen, mit der Verjüngung zur Membran hin zunimmt. Dadurch wird das Auftreten von Spannungspitzen in dem Metallblech, insbesondere in der Membran, insbesondere in einem Bereich des wenigstens einen Vorsprungs, zuverlässig vermieden oder zumindest vermindert.

Die konkave Krümmung des wenigstens einen Vorsprungs bewirkt insbesondere, dass die Steifigkeit der Membran in radialer Richtung entlang des wenigstens einen Vorsprungs zum Sensorkörper und/oder Membranstempel hin zunimmt, d.h. eine Verformung, insbesondere Verbiegung, der Membran unter einer Druckbelastung abnimmt. Dadurch wird gewährleistet, dass sich im Metallblech, insbesondere in der Membran, unter Druckverformung aufbauende Spannung vorzugsweise gleichmäßig, zumindest jedoch großflächig, verteilt, so dass ein Kennwert nicht überschritten wird.

In einer weiteren bevorzugten Ausführung weist die konkave Krümmung einen Krümmungsradius auf. Dadurch kann die Steifigkeit des mit dem wenigstens einen Vorsprung stoffschlüssige verbundenen Metallblech in dem Bereich des Vorsprungs besonders gezielt eingestellt werden. Insbesondere nimmt dadurch die Steifigkeit des Metallblechs in radialer Richtung entlang des einen Vorsprungs zum Sensorkörper und/oder Membranstempel hin besonders vorteilhaft zu. Vorzugsweise divergiert die Steifigkeit dadurch am Übergang des wenigstens einen Vorsprungs zum Sensorkörper und/oder Membranstempel. Dadurch wird eine Wanderung wenigstens eines Anlenkpunkts besonders zuverlässig vermieden oder zumindest vermindert und Spannungen im Metallblech, insbesondere in einem Bereich des wenigstens einen Vorsprungs, besonders zuverlässig vermieden oder zumindest vermindert.

In einer weiteren bevorzugten Ausführung beträgt der Krümmungsradius etwa 0,1 bis 0,4 mm, vorzugsweise etwa 0,15 bis 0,3 mm, bevorzugt etwa 0,2 mm. Dadurch wird eine besonders vorteilhafte Aufnahme wenigstens eines Teils des auf das Metallblech, insbesondere die Membran, wirkenden Drucks gewährleistet, insbesondere wenn das Metallblech, zumindest in dem Bereich der Membran, eine Materialstärke zwischen 0,05 und 0,3 mm, vorzugsweise von etwa 0,1 mm, aufweist.

In einer weiteren bevorzugten Ausführung ist die stoffschlüssige Fügeverbindung als eine Schweiß-, Klebe- und/oder Lötnaht ausgebildet, welche den Sensorkörper und/oder den Membranstempel wenigstens teilweise flächig mit dem Metallblech verbindet. Vorzugsweise geht die Schweiß-, Klebe- und/oder Lötnaht dabei, insbesondere in dem Bereich der Membran, insbesondere kontinuierlich, in den wenigstens einen Vorsprung über. Durch die wenigstens teilweise flächige Fügeverbindung werden der Sensorkörper und/oder der Membranstempel besonders zuverlässig verbunden.

Unter einer flächigen stoffschlüssigen Fügeverbindung im Sinne der Erfindung ist insbesondere eine Verbindung wenigstens zweier Elemente zu verstehen, welche die zwei Elemente kontinuierlich, zumindest aber an mehreren, insbesondere einer Vielzahl von, Verbindungspunkten, miteinander verbindet. Die Verbindungspunkte können dabei auch mikroskopisch oder mesoskopisch ausgebildet sein, d.h. eine mikroskopische oder mesoskopische räumliche Ausdehnung aufweisen. Insbesondere können die Verbindungspunkte dabei in einem im Wesentlichen regelmäßigen Muster oder unregelmäßig angeordnet sein. Sowohl die Verteilung als auch die räumliche Ausdehnung der der Verbindungspunkte muss dabei nicht homogen sein, d.h. in einem Bereich der Verbindung können die Verbindungspunkte klein und eng, in einem anderen Bereich dagegen groß und weit voneinander entfernt ausgebildet bzw. angeordnet sein.

In einer weiteren bevorzugten Ausführung bildet die Schweiß-, Klebe- und/oder Lötnaht zumindest in dem Bereich des wenigstens einen Vorsprungs bzw. in dem Teil, welcher den wenigstens einen Vorsprung bildet, eine Nase, d.h. einen wulstartigen Vorsprung. Vorzugsweise weist der wenigstens eine, derart gebildete Vorsprung sowohl einen konvexen Teil bzw. Bereich als auch einen konkaven Teil bzw. Bereich auf. Dabei geht der konvexe Teil bzw. Bereich bevorzugt kontinuierlich in den konkaven Teil bzw. Bereich über. Weiter vorzugsweise krümmt sich der konvexe Teil bzw. Bereich dabei vom Sensorkörper und/oder Membranstempel weg, während sich der konkave Teil bzw. Bereich, insbesondere kontinuierlich, an das Metallblech bzw. an die Membran anschmiegt. Dadurch nimmt der wenigstens eine Vorsprung zuverlässig zumindest einen Teil der auf das Metallblech, insbesondere die Membran, einwirkenden Belastung auf bzw. verformt sich entsprechend.

In einer weiteren bevorzugten Ausführung ist die stoffschlüssige Fügeverbindung als wenigstens eine Schweißnaht ausgebildet, deren Eindringtiefe in den Sensorkörper und/oder in den Membranstempel einerseits und/oder in das Metallblech andererseits in radialer Richtung des Sensorkörpers variiert. Dadurch kann, insbesondere in einem Bereich, in dem die wenigstens eine Schweißnaht tief in den Sensorkörper und/oder den Membranstempel, bevorzugt in den wenigstens einen Vorsprung, einerseits und das Metallblech andererseits eindringt, eine zuverlässige Verbindung von Sensorkörper und/oder Membranstempel, insbesondere dem wenigstens einen Vorsprung, einerseits und Metallblech andererseits gewährleistet werden, während die mechanischen Eigenschaften, insbesondere die Steifheit, des Sensorkörpers und/oder Membranstempels, insbesondere des wenigstens einen Vorsprungs, und/oder des Metallblechs in einem Bereich, in dem die wenigstens eine Schweißnaht flach in den Sensorkörper und/oder dem Membranstempel, insbesondere in den wenigstens einen Vorsprung, einerseits und das Metallblech andererseits eindringt, nicht oder zumindest nur geringfügig, d.h. nicht wesentlich, beeinflusst werden.

In einer weiteren bevorzugten Ausführung verjüngt sich die wenigstens eine Schweißnaht im Bereich des wenigstens einen Vorsprungs zur Membran hin. Dadurch werden die elastischen Eigenschaften in einem der Membran zugewandten Bereich des wenigstens einen Vorsprungs nicht oder zumindest nur geringfügig, d.h. nicht wesentlich, beeinflusst. Dadurch bleibt die Fähigkeit des wenigstens einen Vorsprungs, Belastung durch Verformung aufzunehmen, insbesondere in einem der Membran zugewandten Bereich, in dem die wenigstens eine Schweißnaht nur noch geringfügig in den wenigstens einen Vorsprung und das Metallblech eindringt, im Wesentlichen erhalten.

In einer weiteren bevorzugten Ausführung reicht die wenigstens eine Schweißnaht maximal zur Hälfte, bevorzugt zu einem Drittel, einer Stärke des Metallblechs in das Metallblech hinein. Vorzugsweise ist die Eindringtiefe der wenigstens eine Schweißnaht in dem Metallblech kleiner als etwa 0,4 mm, bevorzugt kleiner als etwa 0,2 mm, insbesondere kleiner als etwa 0,05 mm. Dadurch wird zuverlässig vermieden, dass die wenigstens eine Schweißnaht die mechanischen Eigenschaften, insbesondere die mechanische Integrität bzw. Stabilität und/oder die elastische Verformbarkeit, des Metallblechs wesentlich beeinflusst. Insbesondere wird vermieden, dass das Metallblech im Bereich der wenigstens einen Schweißnaht unter Druckbelastung, insbesondere unter Verformung und/oder Zugbelastung, reißt oder bricht.

In einer weiteren bevorzugten Ausführung ist die wenigstens eine Schweißnaht als Widerstandsschweißnaht ausgebildet. Vorzugsweise ist dabei ein, insbesondere hochohmiger, Widerstandskörper, in einem Bereich der ausgebildeten oder auszubildenden Widerstandsschweißnaht zur Erzeugung ebendieser angeordnet. Dadurch lassen sich der Sensorkörper und/oder der Membranstempel einerseits und das Metallblech andererseits besonders einfach und zuverlässig stoffschlüssig, insbesondere flächig, miteinander verbinden. Insbesondere kann die Widerstandsschweißnaht erzeugt werden, ohne dass ein direkter Zugang, etwa mit einem Werkzeug oder einer Schweißflamme, zur Widerstandsschweißnaht notwendig ist.

In einer weiteren bevorzugten Ausführung ist der Sensorkörper und/oder der Membranstempel mittels eines additiven Verfahrens stoffschlüssig und flächig mit dem Metallblech fügeverbunden. Vorzugsweise werden dabei der Sensorkörper und/oder der Membranstempel mittels des additiven Verfahrens auf das Metallblech aufgebracht. Vorzugsweise verbindet sich dabei das Metallblech, insbesondere dessen Oberfläche, mit dem Material, insbesondere Metall, aus welchem der Sensorkörper und/oder der Membranstempel additiv gefertigt wird. Dadurch bildet das Metallblech zwischen dem Sensorkörper und dem Membranstempel eine Membran, die vorteilhafte elastische Eigenschaften aufweist. Vorzugsweise wird im Rahmen des additiven Verfahrens auch der wenigstens eine Vorsprung erzeugt, insbesondere auf dem Metallblech aufgebracht. Dadurch ist der wenigstens eine Vorsprung in Bezug auf den Sensorkörper vorteilhaft einstückig mit dem Sensorkörper und oder der wenigstens eine Vorsprung in Bezug auf den Membranstempel vorteilhaft einstückig mit dem Membranstempel gefertigt. Durch das additive Verfahren lässt sich dabei die Form des wenigstens einen Vorsprungs, insbesondere eine konkaven Krümmung, bevorzugt mit einem vorgegebenen Krümmungsradius, besonders einfach erzeugen.

Ein additives Verfahren im Sinne der Erfindung betrifft das Erzeugen eines, insbesondere dreidimensionalen, Werkstückes aus einem oder mehreren Rohmaterialien, insbesondere aus Metallstaub, -pulver, -granulat, oder -draht. Vorzugsweise wird dabei das Rohmaterial sequenziell punktweise durch einen oder mehrere Fertigungsstrahlen, insbesondere räumlich hochauflösend, erhitzt oder gehärtet, insbesondere an- oder geschmolzen, wobei sich beim anschließenden Erstarren bzw. Aushärten ein einziger Festkörper bildet. Weiter vorzugsweise wird die Erhitzung durch einen oder mehrere fokussierte Laser- oder Elektronenstrahlen bewirkt. Das Rohmaterial wird dabei bevorzugt schichtweise aufgetragen und verarbeitet, so dass das Werkstück Stück für Stück, d.h. Schicht für Schicht, entsteht. Dadurch lassen sich vorteilhaft Werkstückstrukturen erzeugen, welche durch klassische Trennverfahren, etwa durch Bohren oder Fräsen, nicht realisierbar sind. Dies betrifft insbesondere sowohl die Formgebung der Werkstücke als auch den Detailgrad, d.h. die räumliche Auflösung.

Additive Fertigungsverfahren werden auch als generative Fertigung bezeichnet und betreffen insbesondere die Urformung eines herzustellenden Werkstücks.

Ein dritter Aspekt der Erfindung betrifft einen Kraft- oder Drucksensor mit einem Sensorgehäuse gemäß dem ersten und/oder zweiten Aspekt der Erfindung.

In einer bevorzugten Ausführung weist der Kraft- oder Drucksensor des Weiteren einen Druckwandler auf, der in einem Innenraum des Sensorkörpers angeordnet ist, insbesondere ein piezoelektrisches Messelement, eingerichtet zur Wandlung eines durch den Membranstempel aufgenommenen Drucks in ein elektrisches Signal. Dadurch kann der Druck in einem Druckraum zuverlässig erfasst werden, ohne dass der Druckwandler den unter Umständen harschen Bedingungen in dem Druckraum, etwa hohen Temperaturen oder ätzenden bzw. korrosiven Gasen, ausgesetzt ist.

Ein vierter Aspekt der Erfindung betrifft ein Verfahren zur Herstellung eines Sensorgehäuses nach einem ersten und/oder zweiten Aspekt der Erfindung, wobei zwischen einem Metallblech und einem Sensorkörper und/oder einem Membranstempel eine stoffschlüssige Fügeverbindung, insbesondere eine Schweißverbindung, in der Weise hergestellt wird, dass diese eine Struktur des Metallblechs maximal etwa bis zur Hälfte, bevorzugt maximal etwa bis zu einem Drittel, einer Stärke des Metallblechs verändert. Dadurch wird gewährleistet, dass die mechanischen Eigenschaften des Metallblech, insbesondere dessen mechanische Bruchfestigkeit und/oder dessen elastischen Eigenschaften, beim stoffschlüssigen Fügeverbinden nicht oder zumindest nicht wesentlich beeinflusst werden.

In einer weiteren bevorzugten Ausführung ist die stoffschlüssige Fügeverbindung eine Schweißverbindung, deren Eindringtiefe im Sensorkörper und/oder im Membranstempel, insbesondere in wenigstens einem Vorsprung des Sensorkörpers und/oder des Membranstempels, einerseits und/oder in dem Metallblech andererseits in radialer Richtung des Metallblechs bzw. des Sensorkörpers variiert. Dadurch kann, insbesondere in einem Bereich, in dem die wenigstens eine Schweißnaht tief in den Sensorkörper und/oder den Membranstempel einerseits und das Metallblech andererseits eindringt, eine zuverlässige Verbindung von Sensorkörper und/oder Membranstempel und Metallblech gewährleistet werden, während die mechanischen Eigenschaften, insbesondere die elastischen Eigenschaften, des Sensorkörpers und/oder Membranstempels, insbesondere des wenigstens einen Vorsprungs, und/oder des Metallblechs in einem Bereich, in dem die wenigstens eine Schweißnaht flach in den Sensorkörper und/oder dem Membranstempel einerseits und das Metallblech andererseits eindringt, nicht oder zumindest nur geringfügig, d.h. nicht wesentlich, beeinflusst werden.

In einer weiteren bevorzugten Ausführung ist die stoffschlüssige Fügeverbindung eine Schweißverbindung, welche mittels eines Faserlasers hergestellt wird. Mittels des Faserlasers kann Energie besonders zielgerichtet und genau in den zu verbindenden Materialien deponiert werden, so dass der Sensorkörper und/oder der Membranstempel, insbesondere der wenigstens eine Vorsprung, insbesondere durch eine sich verjüngende Schweißverbindung, stoffschlüssige mit dem Metallblech verbunden werden kann, ohne dass die mechanischen Eigenschaften des Metallblech, zumindest wesentlich, beeinflusst werden.

In einer weiteren bevorzugten Ausführung wird die Variation der Eindringtiefe der Schweißverbindung durch eine Änderung der Leistung des Faserlasers gesteuert. Vorzugsweise wird die Leistung des Faserlasers derart geändert, dass sich die Schweißverbindung in radialer Richtung zur Membran hin verjüngt. Die Eindringtiefe der Schweißverbindung kann durch Änderung der Leistung des Faserlasers besonders zuverlässig und präzise eingestellt werden.

In einer weiteren bevorzugten Ausführung wird der Sensorkörper und/oder der Membranstempel mittels eines generativen bzw. additiven Fertigungsverfahrens auf dem Metallblech in der Weise aufgebaut, insbesondere erzeugt und/oder aufgebracht, dass die stoffschlüssige Fügeverbindung flächig ausgebildet ist. Insbesondere wird dabei der wenigstens eine Vorsprung in Bezug auf den Sensorkörper einstückig mit dem Sensorkörper und/oder der wenigstens eine Vorsprung in Bezug auf den Membranstempel einstückig mit dem Membranstempel erzeugt. Durch das additive Verfahren lässt sich dabei die Form des wenigstens einen Vorsprungs, insbesondere eine konkaven Krümmung, bevorzugt mit einem vorgegebenen Krümmungsradius, besonders einfach erzeugen. Die im Vorhergehenden ausgeführten Merkmale und Vorteile in Bezug auf den ersten Aspekt der Erfindung gelten, zumindest wo technisch sinnvoll, auch für den zweiten, dritten und vierten Aspekt der Erfindung entsprechend sowie umgekehrt.

Diese und weitere Merkmale und Vorteile gehen außer aus den Ansprüchen und aus der Beschreibung auch aus den Zeichnungen hervor, wobei die einzelnen Merkmale jeweils für sich allein oder zu mehreren, in Form von Unterkombinationen bei einer Ausgestaltung der Erfindung verwirklicht sein können und eine vorteilhafte sowie für sich schutzfähige Ausführung darstellen können, für die ebenfalls Schutz beansprucht wird, sofern sie technisch sinnvoll ist.

Die Erfindung wird im Folgenden an Hand von nicht einschränkenden Ausführungsbeispielen, die in den Figuren dargestellt sind, näher erläutert. Darin zeigen wenigstens teilweise schematisch:
- Fig. 1: zwei beispielhafte Verläufe einer Spannung in einem Metallblech;
- Fig. 2: ein Metallblech in einem unbelasteten und einem belasteten Zustand;
- Fig. 3: ein erstes Ausführungsbeispiel eines erfindungsgemäßen Drucksensors;
- Fig. 4: einen Teil eines Drucksensors gemäß dem ersten Ausführungsbeispiel im Bereich einer Öffnung eines Sensorkörpers;
- Fig. 5: ein zweites Ausführungsbeispiel eines erfindungsgemäßen Drucksensors;
- Fig. 6: einen Teil eines Drucksensors gemäß dem zweiten Ausführungsbeispiel im Bereich einer Öffnung eines Sensorkörpers; und
- Fig. 7: mehrere Anordnungsbeispiele eines Metallblechs und/oder eines Sensorkörpers und/oder eines Membranstempels.

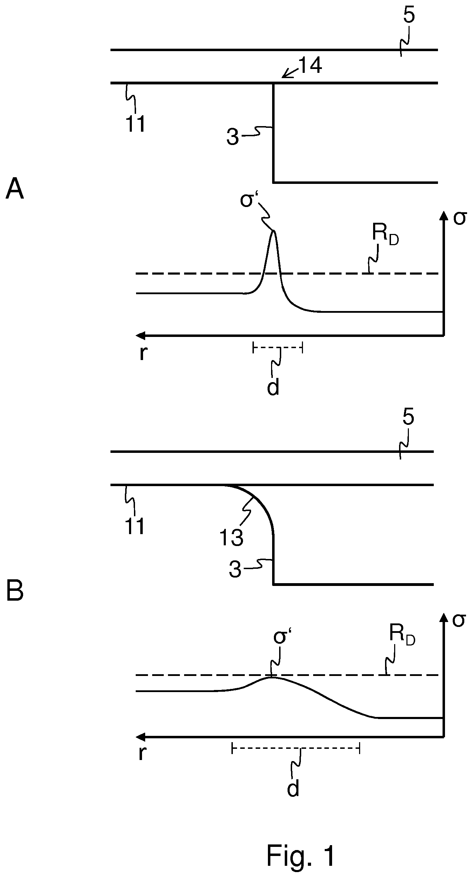

Figur 1 zeigt zwei beispielhafte Verläufe einer Spannung σ in einem Metallblech 5.

Figur 1A zeigt dabei eine Anordnung von Metallblech 5 und Sensorkörper 3 aus dem Stand der Technik. Der Pfeil mit dem Bezugszeichen 14 kennzeichnet darin eine von dem Sensorkörper 3 und dem Metallblech 5 gebildete Ecke, welche den Anlenkpunkt der Membran 11, insbesondere am Sensorkörper 3, definiert.

Im unteren Teil der Figur 1A ist der Verlauf der Spannung σ gegen den Ort r aufgetragen, wobei die Spannung σ in dem Metallblech 5 bei Einwirken eines Drucks entsteht. Im Bereich der Membran 11 ist die Spannung σ aufgrund der Verformung der Membran 11 höher als in einem Bereich des Sensorkörpers 3. Im Bereich des Anlenkpunkts 14 bzw. der Ecke weist die Spannung σ eine Spannungsspitze σ' auf, welche eine, insbesondere vorgegebene, Streckgrenze R_{D} des Metallblechs 5 überschreitet. Die Streckgrenze R_{D} beträgt dabei vorzugsweise etwa 1 %, bevorzugt etwa 0,5 %, insbesondere etwa 0,2 %, d.h. die Streckgrenze R_{D} ist erreicht, wenn sich das Metallblech 5 entsprechend dehnt.

Die Spannungsspitze σ' ist dabei lokalisiert, d.h. sie weist nur eine geringe radiale Ausdehnung d auf, wobei sich die radiale Ausdehnung etwa aus der Halbwertsbreite (FWHM) des Spannungsverlauf ergibt. Dadurch wird das Metallblech 5 bei einer Verformung, insbesondere Auslenkung, der Membran 11 im Bereich des Anlenkpunkts 14 bzw. der Ecke besonders stark beansprucht. Bei einer oszillatorischen Verformung der Membran 11 treten Lastwechselbeanspruchungen auf, welche zu einem Schwingbruch des Metallblechs 5 bzw. der Membran 11 im Bereich des Anlenkpunkts 14 bzw. der Ecke führen können.

Figur 1B zeigt eine erfindungsgemäße Anordnung von Metallblech 5 und Sensorkörper 3. Der Sensorkörper 3 weist dabei einen, insbesondere einstückig mit dem Sensorkörper 3 ausgebildeten, Vorsprung 13 auf, welcher in einer von dem Sensorkörper 3 und dem Metallblech 5 gebildeten Ecke (siehe Figur 1A) angeordnet ist und kontinuierlich in das Metallblech 5 bzw. in die Membran 11 übergeht. Dadurch ist der Vorsprung 13 dazu eingerichtet, zumindest einen Teil der auf das Metallblech 5, insbesondere auf die Membran 11, einwirkenden Belastung aufzunehmen.

Im unteren Teil der Figur 1B ist der Verlauf der Spannung σ gegen den Ort r aufgetragen, wobei auch hier die Spannung σ in dem Bereich der Membran 11 aufgrund der Verformung der Membran 11 höher ist als in dem Bereich des Sensorkörpers 3. Im Bereich des Vorsprungs 13 weist die Spannung σ eine Spannungsspitze σ' auf, welche die, insbesondere vorgegebene, Streckgrenze R_{D} des Metallblechs 5 nicht überschreitet, insbesondere da der Vorsprung 13 zumindest einen Teil der Belastung aufgenommen hat. Dadurch ist die Spannungsspitze σ' auch delokalisiert, d.h. sie weist eine große radiale Ausdehnung d auf. Insgesamt verteilt sich die an dem Anlenkpunkt der Membran 11 auftretende Spannung σ auf einen größeren Bereich als in dem in Figur 1A gezeigten Fall und wird dadurch gemindert. Eine aus einer oszillatorischen Bewegung bzw. Auslenkung der Membran 11 resultierende Lastwechselbeanspruchung führt daher nicht oder nur selten zu einem Schwingungsbruch.

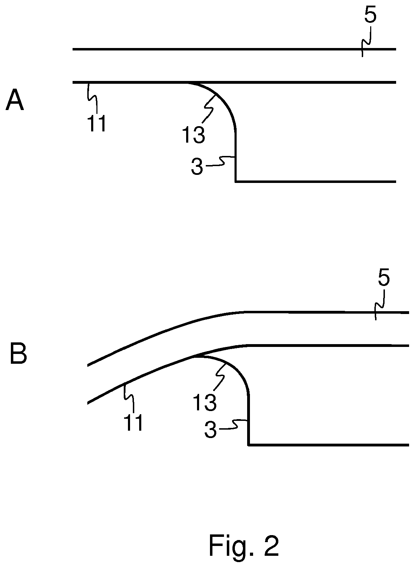

Figur 2 zeigt ein Metallblech 5 in einem unbelasteten Zustand (Figur 2A) und in einem belasteten Zustand (Figur 2B).

Im unbelasteten Zustand verläuft das Metallblech 5 im Wesentlichen gradlinig. Bei Einwirken eines Drucks verformt sich das Metallblech 5 jedoch, insbesondere im Bereich einer Membran 11. Ein Vorsprung 13 eines Sensorkörpers 3, an dem das Metallblech 5 anliegt und/oder mit dem es stoffschlüssig fügeverbunden ist, ist dazu eingerichtet bzw. ausgebildet, zumindest einen Teil der Belastung, insbesondere der Spannung in dem Metallblech 5, insbesondere in der Membran 11, aufzunehmen. Dies wird durch die in Figur 2B aus Anschaulichkeitsgründen übertrieben dargestellte Verformung des Vorsprungs 13 bewirkt.

Der Vorsprung 13 weist dabei vorzugsweise ein elastisch verformbares Material auf, welches bei abnehmendem Druck auf das Metallblech 5 wieder in seine ursprüngliche, in Figur 2A gezeigte, Form zurückkehrt.

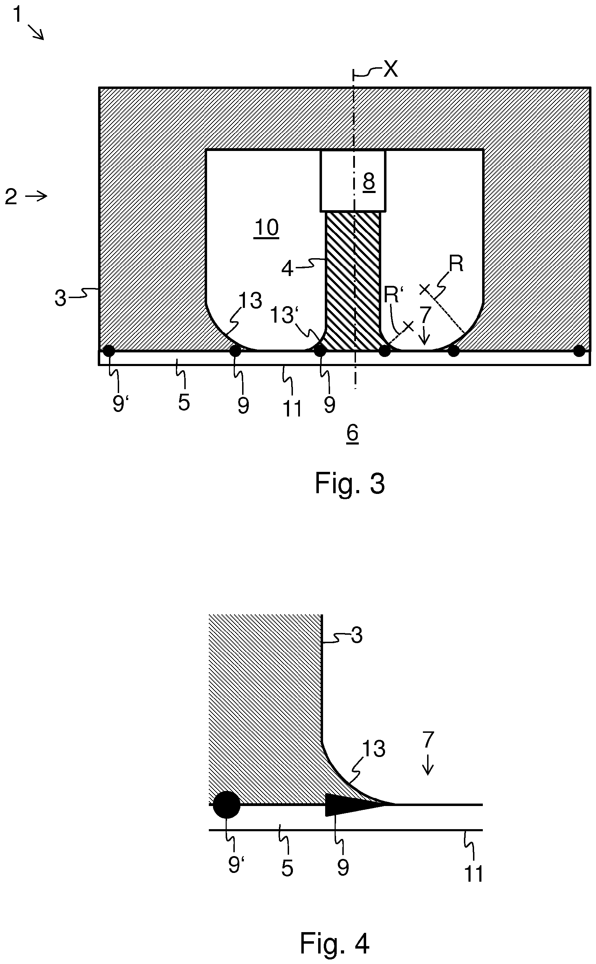

Figur 3 zeigt ein erstes Ausführungsbeispiel eines erfindungsgemäßen Drucksensors 1, insbesondere zum Einsatz in einem Brennraum. Der Drucksensor 1 weist ein Sensorgehäuse 2 mit einem Sensorkörper 3 und einem Membranstempel 4 auf. Der Sensorkörper 3 weist einen ersten Vorsprung 13 und der Membranstempel 4 einen zweiten Vorsprung 13' auf, an denen ein Metallblech 5 mittels einer ersten Verbindung 9 befestigt, insbesondere stoffschlüssig fügeverbunden, ist. Das Metallblech 5 schließt dabei eine einem Druckraum 6, insbesondere einem Brennraum, zugewandte Öffnung 7 des Sensorkörpers 3. Im Inneren des Sensorgehäuses 2 ist ein Druckwandler 8 angeordnet und insbesondere mit dem Membranstempel 4 derart wirkverbunden, dass ein von den Membranstempel 4 aufgenommener Druck, wie weiter unten im Detail beschrieben, von dem Druckwandler 8 in elektrische Signale umgewandelt werden kann.

Der erste Vorsprung 13 des Sensorgehäuses 3 und der zweite Vorsprung 13' des Membranstempels 4 weisen jeweils eine, insbesondere konkave, Krümmung auf. Insbesondere verjüngen sich die Vorsprünge 13, 13' zur Öffnung 7 des Sensorkörpers 3 hin.

Der erste Vorsprung 13 des Sensorkörpers 3 weist einen Krümmungsradius R auf, der beispielhaft eingezeichnet ist. Auch der zweite Vorsprung 13' des Membranstempels 4 weist einen Krümmungsradius R` auf. Es ist in der Figur gut sichtbar, dass die Krümmungsradien R, R' des ersten Vorsprungs 13 des Sensorkörpers 3 und des zweiten Vorsprungs 13' des Membranstempels 4 unterschiedlich groß sind. Alternativ können die Krümmungsradien R, R' aber auch gleich groß sein (nicht dargestellt). Vorzugsweise liegen die Krümmungsradien R, R` in einem Bereich von etwa 0,4-0,1 mm, bevorzugt etwa 0,3-0,15 mm, insbesondere etwa 0,2 mm. In einer weiteren, alternativen Ausbildungsform kann der Vorsprung 13, 13' aber auch eine nicht-gleichmäßige Krümmung, d.h. eine Krümmung ohne einen konstanten Krümmungsradius, aufweisen.

Der Drucksensor 1 weist eine Längsachse X auf. Entsprechend werden im Folgenden Richtungen entlang der Längsachse X als "axiale Richtungen" und Richtungen senkrecht zur Längsachse X als "radiale Richtungen" bezeichnet, auch wenn die Längsachse X nicht explizit eingezeichnet ist. Das Sensorgehäuse 2, insbesondere der Sensorkörper 3 und/oder der Membranstempel 4 und/oder das Metallblech 5, ist vorzugsweise im Wesentlichen rotationssymmetrisch bezüglich der Längsachse X.

Zusätzlich zur ersten Verbindung 9 ist eine zweite Verbindung 9' zwischen Sensorkörper 3 und Metallblech 5 vorgesehen, wobei die zweite Verbindung 9' vorzugsweise im Bereich einer Außenwand, d.h. einer radial außen gelegenen Wand, des Sensorkörpers 3 angeordnet ist. Dadurch wird die Verbindung zwischen Sensorkörper 3 und Metallblech 5 besonders zuverlässig.

In einer bevorzugten Ausführung sind der Sensorkörper 3 und der Membranstempel 4 mittels additiver Fertigung auf das Metallblech 5 aufgebracht, insbesondere in der Weise, dass sie jeweils einen Vorsprung 13, 13' aufweisen. Insbesondere wird zunächst das Metallblech bereitgestellt und eine Schicht Rohmaterial, etwa Metallstaub, auf das Metallblech aufgebracht. Ein oder mehrere Fertigungsstrahlen, insbesondere Laser- oder Elektronenstrahlen, erhitzen, insbesondere schmelzen, die Rohmaterialschicht in vorgegebenen Punkten. Insbesondere werden die vorgegebenen Punkte sequenziell abgefahren, d.h. abgerastert. Vorzugsweise wird dabei auch, zumindest teilweise, die Oberfläche des Metallblechs 5, an- oder geschmolzen, insbesondere in den vorgegebenen Punkten. Beim Aushärten verbindet sich die Rohmaterialschicht an diesen Punkten mit dem Metallblech 5 stoffschlüssig, insbesondere flächig (nicht dargestellt). Anschließend können schrittweise weitere Schichten des Rohmaterials aufgetragen und mit der jeweils bereits ausgehärteten, darunterliegenden Schicht durch den oder die Fertigungsstrahlen verschmolzen werden.

Vorzugsweise weist das Sensorgehäuse 2 einen Spalt 10 zwischen dem Membranstempel 4 und dem Sensorkörper 3 auf. Das Metallblech 5 bildet in dem Bereich, welcher den Spalt 10 zum Druckraum 6 hin begrenzt, insbesondere im Bereich der Öffnung 7 des Sensorkörpers 3, eine, insbesondere flexible bzw. elastische, Membran 11. Die Membran 11 ist daher radial außen von dem Sensorkörper 3 und radial innen von dem Membranstempel 4, insbesondere von dem ersten und zweiten Vorsprung 13, 13', begrenzt und somit kreisringförmig ausgebildet.

Die Membran 11 ist dazu eingerichtet, Druck aus dem Druckraum 6, insbesondere einem Brennraum, durch Verformungen, insbesondere Auslenkung, aufzunehmen. Die Verformung, insbesondere Auslenkung, der Membran 11 überträgt sich auf den mit der Membran durch die Verbindung 9 verbundenen Membranstempel 4. Das Metallblech 5 bzw. die Membran 11 sind derart eingerichtet, dass der Membranstempel 4 bei auf die Membran 11 einwirkendem Druck vorzugsweise etwa 2-6 µm, bevorzugt etwa 4-5 µm, insbesondere etwa 4,5 µm, insbesondere axial, ausgelenkt wird. Die Auslenkung der Membran 11 bzw. des Membranstempels 4 ist dabei, zumindest im Wesentlichen, proportional zum einwirkenden Druck. Dabei wird durch die zweite Verbindung 9' zwischen Sensorkörper 3 und Metallblech 5 insbesondere vermieden, dass die erste Verbindung 9, welche den Anlenkpunkt der Membran definiert, als Wipp-Punkt wirkt. In anderen Worten wird vermieden, dass durch eine Auslenkung der Membran 11 in Richtung einer dem Druckraum 6, insbesondere einem Brennraum, abgewandten Seite ein Spalt zwischen dem radial äußeren Ende des Metallblechs 5 und einem Bereich an der Außenwand, d.h. der radial außen gelegenen Wand, des Sensorkörpers 3 bildet.

Der Membranstempel 4 ist dazu eingerichtet, den aufgenommenen Druck an den Druckwandler 8 abzugeben bzw. an diesen zu übermitteln oder zu übertragen. Der Druckwandler 8 kann daher ein zum Druck im Druckraum 6, insbesondere in einem Brennraum, proportionales elektrisches Signal erzeugen. Vorzugsweise ist der Druckwandler 8 als piezoelektrisches Element ausgebildet, welches abhängig vom einwirkenden Druck bzw. der darin resultierenden Kompression oder Dekompression eine elektrische Spannung erzeugt.

Figur 4 zeigt einen Teil eines Drucksensors im Bereich der Öffnung 7 des Sensorkörpers 3. Das Metallblech 5 ist über eine erste und zweite Verbindung 9, 9' stoffschlüssig mit dem Sensorkörper 3 fügeverbunden. Die erste Verbindung 9 ist dabei zur Öffnung 7 des Sensorkörpers 3, d.h. zur Membran 11, hin verjüngt, insbesondere keilförmig ausgebildet, und endet bevorzugt am radial äußeren Ende des ersten Vorsprungs 13. Alternativ kann die erste Verbindung 9 aber auch über das radial äußere Ende des ersten Vorsprungs 13 hinaus in den Sensorkörper 3 hineinragen (nicht dargestellt). Insbesondere nimmt die Eindringtiefe der ersten Verbindung 9 sowohl in den Sensorkörper 3 bzw. den Vorsprung 13 als auch in das Metallblech 6 zur Öffnung 7 des Sensorkörpers 3 hin ab. Dadurch wird ein kontinuierlicher Übergang von dem ersten Vorsprung 13 zur Membran 11 realisiert und ein Wandern des durch die erste Verbindung 9 definierten Anlenkpunkts der Membran 11 besonders zuverlässig vermieden.

Die Verbindungen 9, 9' reichen vorzugsweise wenigstens 250 µm, bevorzugt wenigstens 400 µm, insbesondere wenigstens 500 µm in das Metallblech 5 hinein, maximal jedoch höchstens bis zu einer Tiefe, welche der Hälfte der Stärke des Metallblech 5 entspricht. Dadurch wird die strukturelle Integrität des Metallblechs 5 bei gleichzeitig zuverlässiger Verbindung des Sensorkörpers 3 mit dem Metallblech 5 gewährleistet.

Die Verbindungen 9, 9' sind bevorzugt als Schweißverbindungen ausgebildet. Vorzugsweise wird insbesondere die erste Verbindung 9 durch Laserschweißen, bevorzugt mit einem Faserlaser, erzeugt. Durch das Einstellen der Leistung des verwendeten Lasers lässt sich die Dicke der Schweißverbindung, d.h. die Eindringtiefe der Schweißverbindung in das Metallblech 5 und/oder das Sensorgehäuse 3 bzw. den Vorsprung 13, variieren und/oder genau vorgeben.

Es sei darauf hingewiesen, dass die vorangegangenen Ausführungen alternativ oder zusätzlich auch die Verbindung des Membranstempels bzw. des zweiten Vorsprungs mit dem Metallblech 5 betreffen können.

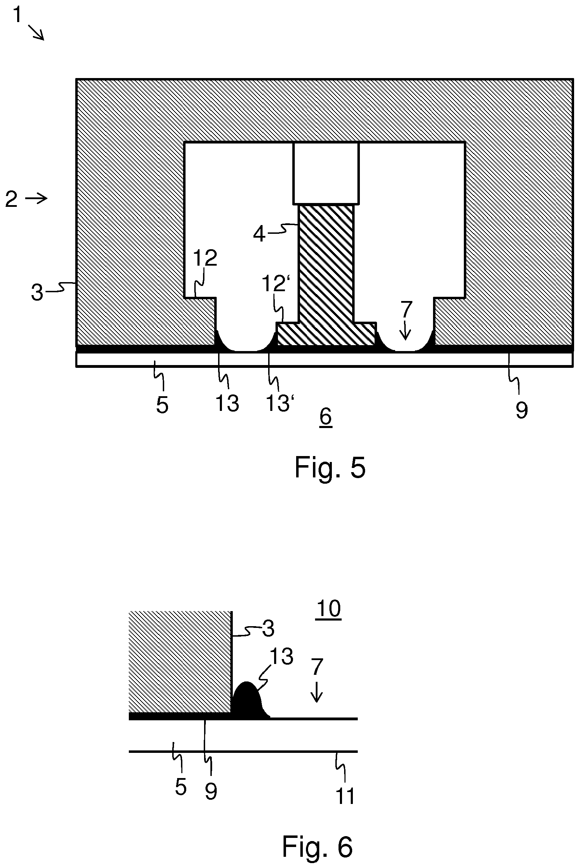

Figur 5 zeigt ein zweites Ausführungsbeispiel eines erfindungsgemäßen Drucksensors 1, insbesondere für einen Brennraum. Der Sensorkörper 3 weist hierbei einen ersten Überstand 12 und der Membranstempel 4 einen zweiten Überstand 12' auf, der im Querschnitt jeweils rechteckig ausgebildet ist. Der erste und zweite Überstand 12, 12' ist insbesondere als Kragen des Sensorkörpers 3 und des Membranstempels 4 ausgebildet. Dabei ist der erste Überstand 12 des Sensorkörpers 3 größer als der zweite Überstand 12' des Membranstempels 4. Alternativ können der erste Überstand 12 des Sensorkörpers 3 und der zweite Überstand 12' des Membranstempels 4 aber auch gleich groß oder in jedem beliebigen anderen Größenverhältnis zueinander ausgebildet sein (nicht dargestellt).

Um einen kontinuierlichen Übergang zwischen Sensorkörper 3 und Metallblech 5 zu gewährleisten, sind der Sensorkörper 3 und das Metallblech 5 mittels einer flächigen, insbesondere stoffschlüssigen, Fügeverbindung 9 miteinander verbunden, wobei die flächige Fügeverbindung 9 im Bereich der Überstände 12, 12', insbesondere im Bereich der Öffnung 7 des Sensorkörpers 3, einen ersten Vorsprung 13 am Sensorkörper 3 und einen zweiten Vorsprung 13' am Membranstempel 4 bildet. Die Vorsprünge 13, 13' sind dabei auf der dem Druckraum 6 abgewandten Seite der flächigen Fügeverbindung 12 angeordnet und verlaufen wenigstens teilweise in einer axialen Richtung entlang des Überstands 12, 12' des Sensorkörpers 3 und/oder des Membranstempels 4. Die Vorsprünge 13, 13' können dabei, wie in der Figur dargestellt, eine der Öffnung 7 des Sensorkörpers 3 zugewandte Seite des zweiten Überstands 12' vollständig und/oder eine der Öffnung 7 des Sensorkörpers 3 zugewandte Seite des ersten Überstands 12 zumindest teilweise bedecken. Alternativ oder zusätzlich können die Vorsprünge 13, 13' aber auch die Seite des ersten Überstands 12 vollständig und/oder die Seite des zweiten Überstands 12' zumindest teilweise bedecken. Insbesondere können die Vorsprünge 13, 13' auch unterschiedlich groß ausgebildet sein (nicht dargestellt).

In einer weiteren alternativen Variante dieses Ausführungsbeispiels weisen der Sensorkörper 3 und der Membranstempel 4 keine Überstände 12, 12' auf (nicht dargestellt). Der erste und zweite Vorsprung 13, 13' sind entsprechend an einer der Öffnung 7 des Sensorkörpers 3 zugewandten Seite des Sensorkörpers 3 und des Membranstempels 4 angeordnet.

Die Vorsprünge 13, 13' weisen eine, insbesondere konkave, Krümmung auf. Vorzugsweise weist die Krümmung einen Krümmungsradius ein einem Bereich von etwa 0,4-0,1 mm, bevorzugt etwa 0,3-0,15 mm, insbesondere etwa 0,2 mm, auf. In einer weiteren, alternativen Ausbildungsform können die Vorsprünge 13, 13' aber auch eine nicht-gleichmäßige Krümmung, d.h. eine Krümmung ohne einen konstanten Krümmungsradius, aufweisen.

Vorzugsweise ist oder wird die flächige Fügeverbindung 9 als Schweißnaht ausgebildet. Alternativ wird oder ist die flächige Fügeverbindung 9 durch Löten oder Kleben hergestellt, so dass die flächige Fügeverbindung 9 als Klebe- oder Lötnaht ausgebildet ist. Dadurch sind auch die Vorsprünge 13, 13' entsprechend aus einer Schweiß-, Klebe- oder Lötnaht gebildet bzw. durch Schweißen, Kleben oder Löten erzeugt.

Figur 6 zeigt einen Teil eines Drucksensors in einem Bereich der Öffnung 7 des Sensorkörpers 3. Das Metallblech 5 ist dabei über eine flächige, insbesondere stoffschlüssige, Fügeverbindung 9 mit dem Sensorkörper 3 verbunden. Die flächige Fügeverbindung 9 bildet in einem Bereich der Öffnung 7 des Sensorkörpers 3 einen Vorsprung 13, welcher nasenartig, insbesondere wulstförmig, in den Innenraum des Sensorkörpers 3, insbesondere in den Spalt 10 zwischen dem Sensorkörper 3 und dem Membranstempel 4, hineinragt. Der Vorsprung 13 ist dabei in einem Bereich vor einer der Öffnung 7 des Sensorkörpers 3 zugewandten Seite des Sensorkörpers 3 konvex, d.h. mit einer konvexen Krümmung, ausgebildet. Der Vorsprung 13 weist zudem auf einer der Öffnung 7 des Sensorgehäuses 3 zugewandten Seite eine konkaven Krümmung auf, so dass ein kontinuierlicher Übergang von Sensorgehäuse 3 zu Membran 11 bewirkt wird. Dabei gehen die konvexe Krümmung und die konkaven Krümmung kontinuierlich ineinander über.

Vorzugsweise ist oder wird die flächige Fügeverbindung 9 als Schweißnaht, insbesondere durch Widerstandsschweißen, ausgebildet. Alternativ wird oder ist die flächige Fügeverbindung 9 durch Löten oder Kleben hergestellt, so dass die flächige Fügeverbindung 9 als Klebe- oder Lötnaht ausgebildet ist.

Es sei darauf hingewiesen, dass die vorangegangenen Ausführungen alternativ oder zusätzlich auch die Verbindung eines Membranstempels mit dem Metallblech 5 und/oder die Verbindung des Metallblechs 5 mit einem in Figur 5 gezeigten Überstand betreffen können.

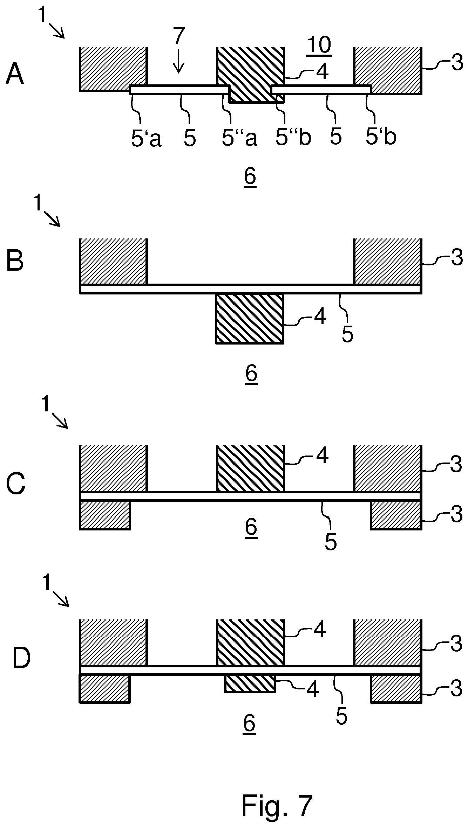

Figur 7 zeigt mehrere Anordnungsbeispiele eines Metallblechs 5 und/oder eines Sensorkörpers 3 und/oder eines Membranstempels 4. Aus Anschaulichkeitsgründen weist der Sensorkörper 3 und/oder der Membranstempel 4 in diesen Anordnungsbeispielen keinen Vorsprung auf. Ebenso wurde auf eine Darstellung der, insbesondere stoffschlüssigen, Verbindung zwischen Sensorkörper 3 und Metallblech 5 verzichtet.

Figur 7A zeigt einen Teil eines Drucksensors 1, bei dem das Metallblech 5 kreisringförmig ausgebildet ist. Die Differenz aus äußerem Kreisringdurchmesser und innerem Kreisringdurchmesser ist dabei im Wesentlichen gleich, insbesondere nur geringfügig größer, als die Breite des Spalts 10 zwischen dem Sensorkörper 3 und dem Membranstempel 4. Ein erster äußerer Rand 5`a und ein zweiter äußerer Rand 5'b des Metallblechs 5 und ein erster innerer Rand 5"a und ein zweiter innerer Rand 5"b des Metallblechs 5 können dabei auf verschiedene Weisen, insbesondere in verschiedenen Geometrien, mit dem Sensorkörper 3 und/oder dem Membranstempel 4 abschließen bzw. verbunden sein. Im Folgenden werden vier beispielhafte Ausführungsformen der Verbindungsgeometrie beschrieben.

In der ersten beispielhaften Ausführungsform der Verbindungsgeometrie weist der Sensorkörper 3 an der Öffnung 7 auf einer dem Membranstempel 4 zugewandten Innenseite eine Stufe auf, an welcher der erste äußere Rand 5'a anliegt. Die Stufe ist dabei weniger tief als die Stärke des Metallblechs 5 ausgebildet, so dass ein Teil des Metallblechs 5 axial aus dem Sensorkörper 3 herausragt. Vorzugsweise ist das Metallblech 5, insbesondere der erste äußere Rand 5'a, zumindest entlang der Konturen der Stufe stoffschlüssig und flächig mit dem Sensorkörper 3 verbunden (nicht dargestellt).

In der zweiten beispielhaften Ausführungsform der Verbindungsgeometrie weist der Membranstempel 4 auf einer der Öffnung 7 zugewandten Seite eine Stufe auf, an welcher der erste innere Rand 5"a anliegt. Die Stufe ist dabei tiefer als die Stärke des Metallblechs 5 ausgebildet, so dass ein Teil des Membranstempels 4 einen druckraumseitigen Vorsprung bildet, insbesondere in den Druckraum 6 hineinragt. Vorzugsweise ist das Metallblech 5, insbesondere der erste innere Rand 5"a, zumindest entlang der Konturen der Stufe stoffschlüssig und flächig mit dem Membranstempel 4 verbunden (nicht dargestellt).

In der dritten beispielhaften Ausführungsform der Verbindungsgeometrie weist der Membranstempel 4 auf einer der Öffnung 7 zugewandten Seite eine Ausnehmung auf, welche das Metallblech 5, insbesondere den zweiten inneren Rand 5"b, insbesondere formschlüssig, aufnimmt. Auch in dieser Ausführungsform bildet ein Teil des Membranstempels 4 einen druckraumseitigen Vorsprung und/oder ragt in den Druckraum 6 hinein. Vorzugsweise ist das Metallblech 5, insbesondere der zweite innere Rand 5"b, zumindest entlang der Konturen der Ausnehmung stoffschlüssig und flächig mit dem Membranstempel 4 verbunden (nicht dargestellt).

In der vierten beispielhaften Ausführungsform der Verbindungsgeometrie weist der Sensorkörper 3 auf einer der Öffnung 7 zugewandten Innenseite eine Stufe auf, an welcher der zweite äußere Rand 5`b anliegt. Die Stufe ist dabei genauso tief wie die Stärke des Metallblechs 5 ausgebildet, so dass der Sensorkörper 3 auf der dem Druckraum 6 zugewandten Seite bündig mit dem Metallblech 5 abschließt. Vorzugsweise ist das Metallblech 5, insbesondere der zweite äußere Rand 5'b, zumindest entlang der Konturen der Stufe stoffschlüssig und flächig mit dem Sensorkörper 3 verbunden (nicht dargestellt).

Es sei angemerkt, dass diese vier Ausführungsformen untereinander austauschbar bzw. miteinander kombinierbar sind.

Figur 7B zeigt einen Teil eines Drucksensors 1, insbesondere zum Einsatz in einem Brennraum, bei dem der Membranstempel 4 auf der dem Sensorkörper 3 gegenüberliegenden Seite des Metallblechs 5 aufgebracht ist, so dass der Membranstempel 4 einen druckraumseitigen Vorsprung bildet, insbesondere in den Druckraum 6, insbesondere einen Brennraum, hineinragt. In dieser Ausführungsform ist auch der Druckwandler nicht im Inneren des Sensorkörpers 3, sondern druckraumseitig wirkverbunden mit dem Membranstempel 4 angeordnet.

Figur 7C zeigt einen Teil eines Drucksensors 1, bei dem sich der Sensorkörper 3 auf der dem Druckraum 6 zugewandten Seite des Metallblechs 5 fortsetzt. Insbesondere ragt der Sensorkörper 3 zumindest teilweise in den Druckraum 6 hinein.

Figur 7D zeigt einen Teil eines Drucksensors 1, bei dem sich sowohl der Sensorkörper 3 als auch der Membranstempel 4 auf der dem Druckraum 6 zugewandten Seite des Metallblechs 5 fortsetzen. Insbesondere ragen der Sensorkörper 3 und der Membranstempel 4 zumindest teilweise in den Druckraum 6 hinein. Wie in Figur 5D dargestellt, können die dem Druckraum 6 zugewandten Teile des Sensorkörpers 3 und des Membranstempels 4 in Form und Größe unterschiedlich ausgebildet sein, insbesondere unterschiedlich weit in den Druckraum 6 hineinragen.

### Bezugszeichenliste

- 1: Drucksensor
- 2: Sensorgehäuse
- 3: Sensorkörper
- 4: Membranstempel
- 5: Metallblech
- 5'a, 5'b: erster, zweiter äußerer Rand
- 5"a, 5"b: erster, zweiter innerer Rand
- 6: Druckraum
- 7: Öffnung des Sensorkörpers
- 8: Druckwandler
- 9, 9': erste, zweite Fügeverbindung
- 10: Spalt
- 11: Membran
- 12, 12': erster, zweiter Überstand
- 13, 13': erster, zweiter Vorsprung
- 14: Anlenkpunkt
- R, R': Krümmungsradius
- d: Ausdehnung einer Spannungsspitze
- R_{D}: Streckgrenze
- r: Ort
- σ: Spannung
- σ': Spannungsspitze

## Patentansprüche

1. Sensorgehäuse (2) für einen Kraft- oder Drucksensor (1), insbesondere zum Einsatz in einem Brennraum, aufweisend:
- einen Sensorkörper (3);
- einen Membranstempel (4);
- ein Metallblech (5), welches den Sensorkörper (3) einseitig abschließt; und
- wenigstens einen Vorsprung (13) in Bezug auf den Sensorkörper (3) und/oder
wenigstens einen Vorsprung (13') in Bezug auf den Membranstempel (4), wobei das Metallblech (5) mit dem Sensorkörper (3) und mit dem Membranstempel (4) in der Weise mittels einer stoffschlüssigen Fügeverbindung (9, 9') verbunden ist, dass das Metallblech (5) in einem Bereich zwischen dem Sensorkörper (3) und dem Membranstempel (4) eine, insbesondere kreisringförmige, Membran (11) bildet, **dadurch gekennzeichnet, dass**
der wenigstens eine Vorsprung (13, 13') in wenigstens einer von zwei Ecken (14), die die Anlenkpunkte der Membran definieren, angeordnet ist und kontinuierlich in die Membran (11) übergeht, welche jeweils von dem Metallblech (5) mit dem Sensorkörper (3) und dem Membranstempel (4) gebildet werden, wobei der wenigstens eine Vorsprung (13, 13') und die Membran (11) in der Weise zusammenwirken, dass der wenigstens eine Vorsprung (13,13') bei Einwirken eines Drucks auf die Membran (11) verformt wird, und wobei der wenigstens eine Vorsprung (13, 13') ein elastisch verformbares Material aufweist, welches bei abnehmendem Druck auf die Membran (11)wieder in seine ursprüngliche Form zurücckehrt.

2. Sensorgehäuse (2) nach Anspruch 1, wobei der wenigstens eine Vorsprung (13, 13') in der Weise ausgebildet ist, dass eine mechanische Kenngröße, insbesondere die Spannung (σ), in dem Metallblech (5), insbesondere in der Membran (11), im Bereich des Vorsprungs (13, 13') bei Einwirken eines Drucks innerhalb einer Betriebsgrenze des Sensorgehäuses auf das Metallblech (5) einen Kennwert des Metallblechs (5), insbesondere dessen Streckgrenze (R_{D}), nicht übersteigt.

3. Sensorgehäuse (2) nach Anspruch 1 oder 2, wobei der wenigstens eine Vorsprung (13, 13') verformt wird, wenn der Druck einen vordefinierten Wert übersteigt.

4. Sensorgehäuse (2) nach einem der vorhergehenden Ansprüche, wobei der wenigstens eine Vorsprung (13, 13') und das Metallblech (5), insbesondere die Membran (11), aneinander anliegen.

5. Sensorgehäuse (2) nach einem der vorhergehenden Ansprüche, wobei die stoffschlüssige Fügeverbindung (9) den Sensorkörper (3) und/oder den Membranstempel (4) derart mit dem Metallblech (5) verbindet, dass der wenigstens eine Vorsprung (13, 13') bei Einwirken eines Drucks auf das Metallblech (5), insbesondere auf die Membran (11), wenigstens einen Teil der Belastung, insbesondere der Spannung (σ), des Metallblechs (5), insbesondere der Membran (11), aufnimmt.

6. Sensorgehäuse (2) nach einem der vorhergehenden Ansprüche, wobei die stoffschlüssige Fügeverbindung (9) den Sensorkörper (3) und/oder den Membranstempel (4) mit dem Metallblech (5) im Bereich des wenigstens einen Vorsprungs (13, 13') verbindet.

7. Sensorgehäuse (2) nach einem der vorhergehenden Ansprüche, wobei wenigstens ein Vorsprung (13) in Bezug auf den Sensorkörper (3) mit dem Sensorkörper (3) und/oder wenigstens ein Vorsprung (13') in Bezug auf den Membranstempel (4) mit dem Membranstempel (4) einstückig ausgebildet ist.

8. Sensorgehäuse (2) nach einem der Ansprüche 1 bis 6, wobei der wenigstens eine Vorsprung (13, 13') von der stoffschlüssigen Fügeverbindung (9) gebildet ist.

9. Sensorgehäuse (2) nach einem der vorangehenden Ansprüche, wobei der wenigstens eine Vorsprung (13, 13') eine konkave Krümmung aufweist.

10. Sensorgehäuse (2) nach Anspruch 9, wobei die konkave Krümmung einen Krümmungsradius (R, R') aufweist.

11. Sensorgehäuse (2) nach Anspruch 10, wobei der Krümmungsradius (R, R') etwa 0,1 bis 0,4 mm, vorzugsweise etwa 0,15 bis 0,3 mm, bevorzugt etwa 0,2 mm beträgt.

12. Sensorgehäuse (2) nach einem der vorhergehenden Ansprüche, wobei die stoffschlüssige Fügeverbindung (9) als eine Schweiß-, Klebe- und/oder Lötnaht ausgebildet ist, welche den Sensorkörper (3) und/oder den Membranstempel (4) wenigstens teilweise flächig mit dem Metallblech (5) verbindet.

13. Sensorgehäuse (2) nach einem der vorhergehenden Ansprüche, wobei die stoffschlüssige Fügeverbindung (9) als wenigstens eine Schweißnaht ausgebildet ist, deren Eindringtiefe in den Sensorkörper (3) und/oder den Membranstempel (4) einerseits und/oder das Metallblech (5) andererseits in radialer Richtung des Sensorkörpers (3) variiert.

14. Sensorgehäuse (2) nach Anspruch 13, wobei sich die wenigstens eine Schweißnaht im Bereich des wenigstens einen Vorsprungs (13, 13') zur Membran (11) hin verjüngt.

15. Sensorgehäuse (2) nach Anspruch 13 oder 14, wobei die wenigstens eine Schweißnaht maximal zur Hälfte, bevorzugt zu einem Drittel, einer Stärke des Metallblechs (5) in das Metallblech (5) hineinreicht.

16. Sensorgehäuse (2) nach einem der Ansprüche 13 bis 15, wobei die wenigstens eine Schweißnaht als Widerstandsschweißnaht ausgebildet ist.

17. Sensorgehäuse (2) nach einem der Ansprüche 1 bis 11, wobei das Sensorgehäuse (3) und/oder der Membranstempel (4) mittels eines additiven Verfahrens stoffschlüssig und flächig mit dem Metallblech (5) fügeverbunden sind.

18. Kraft- oder Drucksensor (1) mit einem Sensorgehäuse (2) nach einem der vorangehenden Ansprüche, insbesondere zum Einsatz in einem Brennraum.

19. Kraft- oder Drucksensor (1) nach Anspruch 18, welcher des Weiteren einen Druckwandler (8) aufweist, der in einem Innenraum des Sensorkörpers (3) angeordnet ist, insbesondere ein piezoelektrisches Messelement, eingerichtet zur Wandlung eines durch den Membranstempel (4) aufgenommenen Drucks in ein elektrisches Signal.

20. Verfahren zur Herstellung eines Sensorgehäuses (2) nach einem der vorangehenden Ansprüche, wobei zwischen einem Metallblech (5) und einem Sensorkörper (3) und/oder einem Membranstempel (4) eine stoffschlüssige Fügeverbindung (9), insbesondere eine Schweißverbindung, in der Weise hergestellt wird, dass diese eine Struktur des Metallblechs (5) maximal etwa bis zur Hälfte, bevorzugt maximal etwa bis zu einem Drittel, einer Stärke des Metallblechs (5) verändert.

21. Verfahren nach Anspruch 20, wobei die stoffschlüssige Fügeverbindung (9) eine Schweißverbindung ist, deren Eindringtiefe im Sensorkörper (3) und/oder im Membranstempel (4), insbesondere in wenigstens einem Vorsprung (13, 13') des Sensorkörpers (3) und/oder des Membranstempels (4), einerseits und/oder in dem Metallblech (5) andererseits in radialer Richtung des Metallblechs (5) bzw. des Sensorkörpers (3) variiert.

22. Verfahren nach Anspruch 20 oder 21, wobei die stoffschlüssige Fügeverbindung (9) eine Schweißverbindung ist, welche mittels eines Faserlasers hergestellt wird.

23. Verfahren nach Anspruch 22, wobei eine Variation der Eindringtiefe der Schweißverbindung durch eine Änderung der Leistung des Faserlasers gesteuert wird.

24. Verfahren nach Anspruch 20, wobei der Sensorkörper (3) und/oder der Membranstempel (4) mittels eines generativen bzw. additiven Fertigungsverfahrens auf dem Metallblech (5) in der Weise aufgebaut werden, dass die stoffschlüssige Fügeverbindung (9) flächig ausgebildet ist.

## Claims

1. A sensor housing (2) for a force or pressure sensor (1), in particular for use in a combustion chamber, comprising:
- a sensor body (3);
- a membrane stamp (4);
- a metal sheet (5) which closes the sensor body (3) on one side; and
- at least one protrusion (13) with respect to the sensor body (3) and/or at least one protrusion (13') with respect to the membrane stamp (4),
wherein the metal sheet (5) is connected to the sensor body (3) and to the membrane stamp (4) by means of a material-closed joint (9, 9') in such a way that the metal sheet (5) forms a membrane (11), in particular an annular membrane (11), in a region between the sensor body (3) and the membrane stamp (4),
**characterized in that** the at least one protrusion (13, 13') is arranged in at least one of two corners (14) defining the articulation points of the membrane and merges continuously into the membrane (11), which are respectively formed by the metal sheet (5) with the sensor body (3) and the membrane stamp (4), wherein the at least one protrusion (13, 13') and the membrane (11) cooperate in such a way that the at least one protrusion (13, 13') is deformed when pressure is applied to the membrane (11), and wherein the at least one protrusion (13, 13') comprises an elastically deformable material which returns to its original shape when the pressure on the membrane (11) decreases.

2. The sensor housing (2) according to claim 1, wherein the at least one protrusion (13, 13') is configured in such a way that a mechanical parameter, in particular the stress (σ), in the metal sheet (5), in particular in the membrane (11), in the region of the protrusion (13, 13') does not exceed a characteristic value of the metal sheet (5), in particular its yield point (R_{D}), when a pressure acts on the metal sheet (5) within an operating limit of the sensor housing.

3. The sensor housing (2) according to claim 1 or 2, wherein the at least one protrusion (13, 13') is deformed when the pressure exceeds a predefined value.

4. The sensor housing (2) according to one of the preceding claims, wherein the at least one protrusion (13, 13') and the metal sheet (5), in particular the membrane (11), are in contact with each other.

5. The sensor housing (2) according to one of the preceding claims, wherein the material-closed joint (9) connects the sensor body (3) and/or the membrane stamp (4) to the metal sheet (5) in such a way that the at least one protrusion (13, 13') absorbs at least part of the load, in particular the stress (σ), of the metal sheet (5), in particular of the membrane (11), when a pressure acts on the metal sheet (5), in particular on the membrane (11).

6. The sensor housing (2) according to one of the preceding claims, wherein the material-closed joint (9) connects the sensor body (3) and/or the membrane stamp (4) to the metal sheet (5) in the region of the at least one protrusion (13, 13').

7. The sensor housing (2) according to any one of the preceding claims, wherein at least one protrusion (13) with respect to the sensor body (3) is configured integrally with the sensor body (3) and/or at least one protrusion (13') with respect to the membrane stamp (4) is configured integrally with the membrane stamp (4).

8. The sensor housing (2) according to one of claims 1 to 6, wherein the at least one protrusion (13, 13') is formed by the material-closed joint (9).

9. The sensor housing (2) according to any one of the preceding claims, wherein the at least one protrusion (13, 13') has a concave curvature.

10. The sensor housing (2) according to claim 9, wherein the concave curvature has a radius of curvature (R, R').

11. The sensor housing (2) according to claim 10, wherein the radius of curvature (R, R') is about 0.1 to 0.4 mm, preferably about 0.15 to 0.3 mm, preferably about 0.2 mm.

12. The sensor housing (2) according to one of the preceding claims, wherein the material-closed joint (9) is configured as a welded, bonded and/or soldered seam which connects the sensor body (3) and/or the membrane stamp (4) at least partially in a planar manner to the metal sheet (5).

13. The sensor housing (2) according to one of the preceding claims, wherein the material-closed joint (9) is configured as at least one weld seam, the penetration depth of which into the sensor body (3) and/or the membrane stamp (4) on the one hand and/or the metal sheet (5) on the other hand varies in the radial direction of the sensor body (3).

14. The sensor housing (2) according to claim 13, wherein the at least one weld seam tapers towards the membrane (11) in the region of the at least one protrusion (13, 13').

15. The sensor housing (2) according to claim 13 or 14, wherein the at least one weld seam extends into the metal sheet (5) to a maximum of half, preferably one third, of a thickness of the metal sheet (5).

16. The sensor housing (2) according to any one of claims 13 to 15, wherein the at least one weld seam is configured as a resistance weld seam.

17. The sensor housing (2) according to one of claims 1 to 11, wherein the sensor housing (3) and/or the membrane stamp (4) are joined to the metal sheet (5) by means of an additive process.

18. A force or pressure sensor (1) with a sensor housing (2) according to one of the preceding claims, in particular for use in a combustion chamber.

19. The force or pressure sensor (1) according to claim 18, which further comprises a pressure transducer (8) arranged in an interior space of the sensor body (3), in particular a piezoelectric measuring element, set up for converting a pressure picked up by the membrane stamp (4) into an electrical signal.

20. A method for producing a sensor housing (2) according to one of the preceding claims, wherein between a metal sheet (5) and a sensor body (3) and/or a membrane stamp (4) a material-closed joint (9), in particular a welded connection, is produced in such a way that it changes a structure of the metal sheet (5) at most up to about half, preferably at most up to about one third, of a thickness of the metal sheet (5).

21. The method according to claim 20, wherein the material-closed joint (9) is a welded joint, the penetration depth of which in the sensor body (3) and/or in the membrane stamp (4), in particular in at least one protrusion (13, 13') of the sensor body (3) and/or of the membrane stamp (4), on the one hand and/or in the metal sheet (5) on the other hand, varies in the radial direction of the metal sheet (5) or of the sensor body (3).

22. The method according to claim 20 or 21, wherein the material-closed joint (9) is a welded joint which is produced by means of a fiber laser.

23. The method of claim 22, wherein a variation in the depth of penetration of the weld joint is controlled by a change in the power of the fiber laser.

24. The method according to claim 20, wherein the sensor body (3) and/or the membrane stamp (4) are built up on the metal sheet (5) by means of a generative or additive manufacturing process in such a way that the material-closed joint (9) is configured in a planar manner.

## Revendications

1. Boîtier de capteur (2) pour un capteur de force ou de pression (1), en particulier pour une utilisation dans une chambre de combustion, présentant :
- un corps de capteur (3) ;
- un poinçon à membrane (4) ;
- une tôle métallique (5) qui ferme d'un côté le corps du capteur (3) ; et
- au moins une partie faisant saillie (13) par rapport au corps du capteur (3) et/ou au moins une partie faisant saillie (13') par rapport au poinçon à membrane (4),
dans lequel la tôle métallique (5) est reliée au corps du capteur (3) et au poinçon à membrane (4) au moyen d'un assemblage par liaison de matière (9, 9') de telle manière que la tôle métallique (5) forme une membrane (11), en particulier de forme annulaire circulaire, dans une zone entre le corps du capteur (3) et le poinçon à membrane (4), **caractérisé en ce que** l'au moins une partie faisant saillie (13, 13') est disposée dans au moins un des deux coins (14) qui définissent les points d'articulation de la membrane et se prolonge en continu dans la membrane (11), lesquels sont formés respectivement par la tôle métallique (5) avec le corps du capteur (3) et le poinçon à membrane (4), dans lequel l'au moins une partie faisant saillie (13, 13') et la membrane (11) coopèrent de telle manière que l'au moins une partie faisant saillie (13,13') est déformée lors de l'action d'une pression exercée sur la membrane (11), et dans lequel l'au moins une partie faisant saillie (13, 13') présente un matériau élastiquement déformable, qui reprend sa forme initiale lorsque la pression sur la membrane (11) diminue.

2. Boîtier de capteur (2) selon la revendication 1, dans lequel l'au moins une partie faisant saillie (13, 13') est réalisée de telle manière qu'une grandeur caractéristique mécanique, en particulier la tension (σ), dans la tôle métallique (5), en particulier dans la membrane (11), ne dépasse pas une valeur caractéristique de la tôle métallique (5), en particulier sa limite d'élasticité (RD), dans la zone de la partie faisant saillie (13, 13') lors de l'action d'une pression à l'intérieur d'une limite de fonctionnement du boîtier de capteur sur la tôle métallique (5).

3. Boîtier de capteur (2) selon la revendication 1 ou 2, dans lequel l'au moins une partie faisant saillie (13, 13') est déformée lorsque la pression dépasse une valeur prédéfinie.

4. Boîtier de capteur (2) selon l'une quelconque des revendications précédentes, dans lequel l'au moins une partie faisant saillie (13, 13') et la tôle métallique (5), en particulier la membrane (11), sont en contact l'une avec l'autre.

5. Boîtier de capteur (2) selon l'une quelconque des revendications précédentes, dans lequel l'assemblage par liaison de matière (9) relie le corps de capteur (3) et/ou le poinçon à membrane (4) à la tôle métallique (5) de telle manière que l'au moins une partie faisant saillie (13, 13') absorbe au moins une partie de la contrainte, en particulier de la tension (σ), de la tôle métallique (5), en particulier de la membrane (11), lors de l'application d'une pression sur la tôle métallique (5), en particulier sur la membrane (11).

6. Boîtier de capteur (2) selon l'une quelconque des revendications précédentes, dans lequel l'assemblage par liaison de matière (9) relie le corps de capteur (3) et/ou le poinçon à membrane (4) à la tôle métallique (5) dans la zone de l'au moins une partie faisant saillie (13, 13').

7. Boîtier de capteur (2) selon l'une quelconque des revendications précédentes, dans lequel au moins une partie faisant saillie (13) par rapport au corps de capteur (3) est réalisée d'un seul tenant avec le corps de capteur (3) et/ou au moins une partie faisant saillie (13') par rapport au poinçon à membrane (4) est réalisée d'un seul tenant avec le poinçon à membrane (4).

8. Boîtier de capteur (2) selon l'une quelconque des revendications 1 à 6, dans lequel l'au moins une partie faisant saillie (13, 13') est formée par l'assemblage par liaison de matière (9).

9. Boîtier de capteur (2) selon l'une quelconque des revendications précédentes, dans lequel l'au moins une partie faisant saillie (13, 13') présente une courbure concave.

10. Boîtier de capteur (2) selon la revendication 9, dans lequel la courbure concave présente un rayon de courbure (R, R').

11. Boîtier de capteur (2) selon la revendication 10, dans lequel le rayon de courbure (R, R') est d'environ 0,1 à 0,4 mm, de préférence d'environ 0,15 à 0,3 mm, de préférence d'environ 0,2 mm.

12. Boîtier de capteur (2) selon l'une quelconque des revendications précédentes, dans lequel l'assemblage par liaison de matière (9) est un cordon de soudure, de collage et/ou de brasage qui relie le corps de capteur (3) et/ou le poinçon à membrane (4) au moins en partie à plat avec la tôle métallique (5).

13. Boîtier de capteur (2) selon l'une quelconque des revendications précédentes, dans lequel l'assemblage par liaison de matière (9) est réalisé comme au moins un cordon de soudure dont la profondeur de pénétration dans le corps de capteur (3) et/ou le poinçon à membrane (4) d'une part et/ou dans la tôle métallique (5) d'autre part varie dans le sens radial du corps de capteur (3).

14. Boîtier de capteur (2) selon la revendication 13, dans lequel l'au moins un cordon de soudure se rétrécit vers la membrane (11) dans la zone de l'au moins une partie faisant saillie (13, 13').

15. Boîtier de capteur (2) selon la revendication 13 ou 14, dans lequel l'au moins un cordon de soudure pénètre dans la tôle métallique (5) jusqu'à la moitié au maximum, de manière préférée jusqu'à un tiers, d'une épaisseur de la tôle métallique (5).

16. Boîtier de capteur (2) selon l'une quelconque des revendications 13 à 15, dans lequel l'au moins un cordon de soudure est réalisé comme un cordon de soudure par résistance.

17. Boîtier de capteur (2) selon l'une quelconque des revendications 1 à 11, dans lequel le boîtier de capteur (3) et/ou le poinçon à membrane (4) sont assemblés par liaison de matière et de manière plane à la tôle métallique (5) au moyen d'un procédé additif.

18. Capteur de force ou de pression (1) avec un boîtier de capteur (2) selon l'une quelconque des revendications précédentes, en particulier pour une utilisation dans une chambre de combustion.

19. Capteur de force ou de pression (1) selon la revendication 18, qui présente par ailleurs un convertisseur de pression (8) qui est disposé dans un espace intérieur du corps du capteur (3), en particulier un élément de mesure piézoélectrique mis au point pour convertir une pression absorbée par le poinçon à membrane (4) en un signal électrique.

20. Procédé de fabrication d'un boîtier de capteur (2) selon l'une quelconque des revendications précédentes, dans lequel un assemblage par liaison de matière (9), en particulier un assemblage par soudage, est réalisé entre une tôle métallique (5) et un corps de capteur (3) et/ou un poinçon à membrane (4) de telle manière qu'il modifie une structure de la tôle métallique (5) au maximum jusqu'à environ la moitié, de manière préférée au maximum jusqu'à environ un tiers d'une épaisseur de tôle métallique (5).

21. Procédé selon la revendication 20, dans lequel l'assemblage par liaison de matière (9) est un assemblage par soudage dont la profondeur de pénétration dans le corps du capteur (3) et/ou dans le poinçon à membrane (4), en particulier dans au moins une partie faisant saillie (13, 13') du corps du capteur (3) et/ou du poinçon à membrane (4), d'une part et/ou dans la tôle métallique (5) d'autre part varie dans le sens radial de la tôle métallique (5) ou du corps du capteur (3).

22. Procédé selon la revendication 20 ou 21, dans lequel l'assemblage par liaison de matière (9) est un assemblage par soudage, lequel est fabriqué au moyen d'un laser à fibre.

23. Procédé selon la revendication 22, dans lequel une variation de la profondeur de pénétration de l'assemblage par soudage est commandée par une modification de la puissance du laser à fibre.

24. Procédé selon la revendication 20, dans lequel le corps de capteur (3) et/ou le poinçon à membrane (4) sont montés sur la tôle métallique (5) au moyen d'un procédé de fabrication générative ou additive de telle manière que l'assemblage par liaison de matière (9) est réalisé de manière plane.
